# EUROPEAN PATENT SPECIFICATION

(11) **EP 3 465 096 B1**
(45) Date of publication and mention of the grant of the patent: **01.06.2022**
(21) Application number: 17803165.4
(22) Date of filing: 16.05.2017
(51) Int. Cl.: G02B 27/01, B64D 43/00, B64D 47/00, F41G 3/16, F41G 3/22, F41G 9/00, G01S 7/04

(54) **METHOD FOR CONTROLLING A DISPLAY MODE IN A COMBAT AIRCRAFT**
VERFAHREN ZUR STEUERUNG EINES ANZEIGEMODUS BEI EINEM KAMPFFLUGZEUG
PROCÉDÉ DE COMMANDE D'UN MODE D'AFFICHAGE DANS UN AÉRONEF DE COMBAT

(30) Priority: 23.05.2016 SE 1650700
(43) Date of publication of application: 10.04.2019
(73) Proprietor: SAAB AB, 581 88 Linköping (SE)
(72) Inventor: LUNDQVIST, Anders, SE-185 99 Vaxholm (SE); KENSING, Vibeke, SE-590 48 Vikingstad (SE)
(74) Representative: Zacco Sweden AB
(86) International application number: PCT/SE2017/050508
(87) International publication number: WO 2017/204721

(56) References cited:
- EP-A2- 2 722 821
- EP-A2- 2 722 821
- WO-A1-95/19545
- WO-A1-02/090890
- WO-A1-2013/122521
- WO-A1-2013/122521
- US-A1- 2003 060 942
- US-A1- 2004 044 445
- US-A1- 2004 044 445
- HITT E F ED - INSTITUTE OF ELECTRICAL AND ELECTRONICS ENGINEERS: "Retrofit of flat panel color displays in the F-16A/B", PROCEEDINGS OF THE DIGITAL AVIONICS SYSTEMS CONFERENCE. SEATTLE, OCT. 5 - 8, 1992; [PROCEEDINGS OF THE DIGITAL AVIONICS SYSTEMS CONFERENCE], NEW YORK, IEEE, US, vol. CONF. 11, 5 October 1992 (1992-10-05) , pages 323-328, XP010106744, DOI: 10.1109/DASC.1992.282136 ISBN: 978-0-7803-0820-6
- ADAM E C ED - INSTITUTE OF ELECTRICAL AND ELECTRONICS ENGINEERS: "FIGHTER COCKPITS OF THE FUTURE", PROCEEDINGS OF THE AIAA/IEEE DIGITAL AVIONICS SYSTEMS CONFERENCE. NEW YORK, OCT. 25 - 28, 1993; [PROCEEDINGS OF THE AIAA/IEEE DIGITAL AVIONICS SYSTEMS CONFERENCE], NEW YORK, IEEE, US, vol. CONF. 12, 25 October 1993 (1993-10-25), pages 318-323, XP000451677,

## Description

### Field of the invention

The invention relates to a method for controlling a display mode in a combat aircraft.

### Background of the invention

Document US 6,567,014 B1 describes an aircraft head up display system that displays a basic mode, an en route mode, or an approach/landing mode. When the aircraft attitude changes to predefined unusual attitude conditions, the display changes to an unusual attitude mode to indicate the unusual attitude condition. The display in the unusual attitude mode removes non-essential symbols and displays the aircraft air speed, altitude and attitude.

Document WO 2013/122521 A1 describes a method for decision support of a first combat aircraft in a combat situation. The method comprises detecting a second combat aircraft; analysing the second combat aircraft to determine its type, its sensor capacity and its total weapons capacity; and recording the sensor capacity and the total weapons capacity of the second combat aircraft to determine a first geographic zone adapted for defining the detection limit of the second combat aircraft, and a second geographic zone adapted for defining a shoot-down limit of the second combat aircraft respectively, wherein the first and the second geographic zone are adapted for decision support of the first combat aircraft in the combat situation with the second combat aircraft. Thereby assistance is provided to the pilot in decision support in complicated combat situations.

Highly developed functions for human machine interface, HMI for short, and decision support as support functions for the pilot environment in combat aircraft already exist. All solutions are based on and adapted for high tempo in flight and combat situations where HMI and decision support together describe the current position and display tools and solutions to the pilot. Existing solutions are based on the aircraft itself and its available resources and tools. Sensors, such as radar, are typically operated by the pilot as a tool for close-range scanning or for scanning objects for identification and continued pursuit. Decision support supports the multiple use of sensors by merging objects detected by several different sensors and coordinating and correlating these objects in a situation picture. This is usually done via networks in further steps to create a common situation picture between several aircraft within an aircraft group.

When complexity increases because more tools and sensors are supplied, the possibilities available to the pilot to control his tools and/or sensors in time are limited and made difficult. In time-critical situations, for instance in air combat, the pilot risks becoming the underdog. Another limitation is the fact that each tool and/or sensor has its own characteristics and peculiarities. Each sensor and/or tool therefore requires its own interface and control functions which the pilot needs to be able to understand and use correctly.

### Summary of the invention

It is the object of the invention to provide a possibility for controlling a display mode such that the pilot gets a quick overview.

This object is achieved by the subject matter of independent claim 1. Preferred embodiments are defined in the sub claims.

According to an example which is not part of the invention, the method comprises the step of recording sensor capacity and detection area, wherein the recorded data is adapted for generating a situation picture. According to this example which is not part of the invention, the method preferably comprises the step of displaying the recorded data corresponding to displaying a plurality of situation pictures.

According to a preferred embodiment of the invention, the step of determining sensor capacity of the enemy combat aircraft is performed by detecting or by assuming the sensor capacity of the enemy combat aircraft. The detection of sensor capacity of the enemy combat aircraft is preferably done when the enemy combat aircraft is in proximity to the combat aircraft.

According to a preferred embodiment of the invention, the display mode is selected based on a predetermined condition comprising the determined change in position relative to a predefined zone. The predefined zone preferably corresponds to a geographic zone adapted for defining the detection limit of the enemy combat aircraft of to a geographic zone adapted for defining a shoot-down limit of the enemy combat aircraft, respectively, wherein the geographic zone is adapted for decision support of the combat aircraft in a combat situation with the enemy combat aircraft.

According to an example which is not part of the invention, detecting is preferably performed by a sensor, such as radar, a database and/or a link and controlling the display mode is performed in a continuous fashion such that the display is continuously switched between different modes when a probabilistic value is exceeded, wherein the probalistic value is determined by at least one of a predefined detection criterion, a predefined identification criterion and a predefined behaviour criterion of the enemy combat aircraft. Such a predefined criterion preferably comprises a predefined altitude limit, a predefined speed limit and/or a combat tactical criterion, such as at least one sensor parameter and/or a weapon limit.

The terms "in a continuous fashion" and "continuously switched" refer to the switching of the display mode and mean that switching of the display mode is done continuously in time and/or in frequency. This is preferably done in a way such that a user cannot perceive a discrete change on the screen of the display. This preferably corresponds to the fact that a change of the display mode is done such that the display screen shows the change of the display mode without punctuation or without interruption, i.e. the user cannot perceive the change of display mode by a discrete fluctuation on the display screen itself.

According to a preferred embodiment of the invention, the enemy combat aircraft corresponds to at least one of a ground station, an unmanned aerial vehicle and a helicopter.

It is an idea of the invention that the step of controlling, i.e. step d), is adapted for decision support when preferably handled three dimensionally, i.e. the calculations in the previous steps referring to the determination of different parameters, such as sensor capacity and position, are performed in three dimensions. However, a two dimensional display for the pilot is typically sufficient for decision support.

It is an idea of the invention that the aircraft adapts its HMI to the pilot based on the assessed combat situation. The adaptation is achieved by two modes: Firstly, the pilot's own aircraft is assessed not to have been detected. This situation picture is recorded on the basis of a zone perspective with different zones indicated on the basis of the overall enemy situation. Secondly, the pilot's own aircraft is assessed to have been detected. The situation picture assumes a duel mode in which every enemy aircraft is recorded from a duel perspective. In this way, a good overview of combat in an early stage is provided by means of an overall perspective based on zone areas. In more intensive combat, where survival is assessed as critical, the perspective shifts to a duel situation with a duel against every defined enemy aircraft. It is a further idea of the invention to adapt to different situations. It is switched between a zone mode and a duel mode, wherein the duel mode is on top priority. If the pilot is inside the detection area it is switched to a duel mode and a duel with every opponent is established. If the pilot is outside of the detection area it is switched to a zone mode such that the pilot gets an overview over the complete situation. In the duel mode, there are restricted volumes of interest, i.e. the object is of interest. In the zone mode, there are areas of interest. Hence, it is an idea of the situation to provide a situation-adapted method in order to be almost always aware of the current situation.

### Brief description of the drawings

These and other aspects of the invention will be apparent from and elucidated with reference to the embodiments described hereinafter. In the drawings:
Fig. 1 illustrates the steps of a method for controlling a display mode in a combat aircraft according to a preferred embodiment of the inventions; and
Fig. 2 shows an HMI display mode controlled in a combat situation with zone mode or duel mode according to another preferred embodiment of the invention.

### Detailed description of embodiments

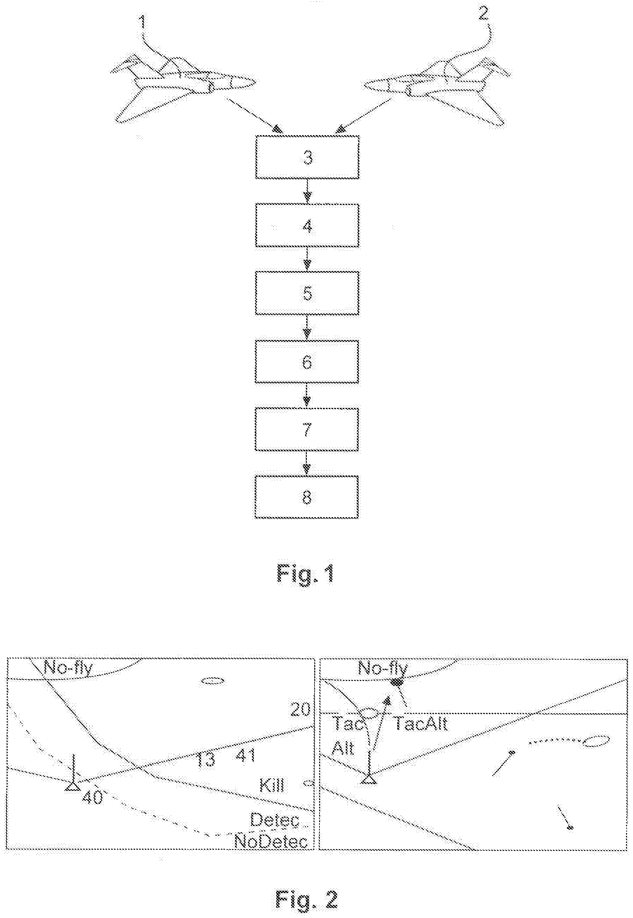

Fig. 1 shows the steps of a method for controlling a display mode in a combat aircraft according to a preferred embodiment of the invention. Firstly, sensor capacity of an enemy combat aircraft 2 is determined 3. Secondly, a detection area based on the determined sensor capacity from the previous step is formed 4. Thirdly, the position of the combat aircraft 1 relative to the detection area is determined 5, and, finally, the display mode is controlled 6 based on the determined difference in position from the previous step. The determined difference in position is adapted for indicating whether the combat aircraft is inside or outside the detection area. In further steps, it is possible to record 7 sensor capacity and detection area and to display 8 the recorded data.

Fig. 2 shows an HMI display mode controlled in a combat situation with zone mode or duel mode according to another preferred embodiment of the invention. HMI operates either zone-oriented or duel-oriented dependent on the assessed position. Zone position applies generally and it is not until the detection area is entered that the pilot's own aircraft is assumed to have been detected by the enemy aircraft. Any detection can be either analyzed by the decision support or set manually by the pilot. It is then shifted to a duel mode and HMI then operates with one duel for every enemy aircraft instead of with several duels combined. When the combat situation resumes its original character, HMI returns to zone position. This takes place either by manual switching or automatically by means of decision support.

In this way a good overview at an early stage facilitates planning an initiative-taking with low risk to one's own aircraft. When the risk increases because one's own aircraft is detected, the perspective switches to a duel situation with a threat object, such as an enemy combat aircraft or a ground station arranged near or on a surface-to-air missile site. In the duel situation every threat can be prioritized and handled on the basis of the risk it presents in the relevant time perspective.

The embodiments of the invention as illustrated and described in detail in the drawings and foregoing description may be combined.

## Claims

1. A method for controlling a display mode in a combat aircraft (1) comprising the steps of:
a) determining (3) sensor capacity of an enemy combat aircraft (2),
b) forming (4) a detection area based on the determined sensor capacity from the previous step a), and
c) determining (5) the position of the combat aircraft (1) relative to the detection area,
**characterized by**
d) controlling (6) the display mode based on the determined relative position from the previous step c), wherein the determined relative position is adapted for indicating whether the combat aircraft (1) is inside or outside the detection area, if the combat aircraft (1) is outside of the detection area the display mode is switched to a zone mode showing an overview of an overall enemy situation, and if the combat aircraft (1) is inside the detection area the display mode is switched to a duel mode showing restricted volumes of the overall enemy situation relating to the enemy combat aircraft (2).

2. The method according to claim 1, wherein the step of determining (3) sensor capacity of the enemy combat aircraft (2) is performed by detecting or by assuming the sensor capacity of the enemy combat aircraft (2).

3. The method according to claim 1 or 2, wherein the display mode is selected based on a predetermined condition comprising the determined change in position relative to a predefined zone, wherein the predefined zone is a geographic zone indicative of a shoot-down limit of the enemy combat aircraft (2).

4. The method according to one of the preceding claims, wherein the enemy combat aircraft (2) corresponds to at least one of an unmanned aerial vehicle and a helicopter.

## Patentansprüche

1. Verfahren zur Steuerung eines Anzeigemodus in einem Kampfflugzeug (1) umfassend die folgenden Schritte:
a) Bestimmen (3) der Sensorkapazität eines feindlichen Kampfflugzeugs (2),
b) Bilden (4) eines Detektionsbereichs basierend auf der bestimmten Sensorkapazität aus dem vorhergehenden Schritt a), und
c) Bestimmen (5) der Position des Kampfflugzeuges (1) relativ zum Detektionsbereich,
**gekennzeichnet durch**
d) Steuern (6) des Anzeigemodus basierend auf der bestimmten relativen Position aus dem vorhergehenden Schritt c), wobei die bestimmte relative Position für das Anzeigen ausgelegt ist, ob sich das Kampfflugzeug (1) innerhalb oder außerhalb des Detektionsbereichs befindet, wenn sich das Kampfflugzeug (1) außerhalb des Detektionsbereichs, der Anzeigemodus in einen Zonenmodus geschaltet wird, der einen Überblick der Gesamtfeindlage zeigt, und wenn sich das Kampfflugzeug (1) innerhalb des Detektionsbereichs befindet, der Anzeigemodus in eine Duell-Modus geschaltet wird, der eingeschränkte Volumen der Gesamtfeindlage bezüglich des feindlichen Kampfflugzeuges (2) zeigt.

2. Verfahren nach Anspruch 1, wobei der Schritt des Bestimmens (3) der Sensorkapazität des feindlichen Kampfflugzeugs (2) durch Erfassen oder durch Bewerten der Sensorkapazität des feindlichen Kampfflugzeugs (2) durchgeführt wird.

3. Verfahren nach Anspruch 1 oder 2, wobei der Anzeigemodus basierend auf einem vorbestimmten Zustand umfassend die bestimmte Positionsänderung relativ zu einer vordefinierten Zone ausgewählt wird, wobei die vordefinierte Zone eine geographische Zone ist, die eine Abschussgrenze des feindlichen Kampfflugzeugs (2) angibt.

4. Verfahren nach einem der vorhergehenden Ansprüche, wobei das feindliche Kampfflugzeug (2) zumindest einem von einem unbemannten Luftfahrzeug und einem Hubschrauber entspricht.

## Revendications

1. Procédé de commande d'un mode d'affichage dans un avion de combat (1) comprenant les étapes consistant à :
a) déterminer (3) la capacité de capteur d'un avion de combat ennemi (2),
b) former (4) une zone de détection sur la base de la capacité de capteur déterminée à l'étape précédente a), et
c) déterminer (5) la position de l'avion de combat (1) par rapport à la zone de détection,
**caractérisé par**
d) la commande (6) du mode d'affichage sur la base de la position relative déterminée de l'étape précédente c), où la position relative déterminée est adaptée pour indiquer si l'avion de combat (1) est à l'intérieur ou en dehors de la zone de détection, si l'avion de combat (1) est à l'extérieur de la zone de détection, le mode d'affichage est commuté vers un mode de zone montrant une vue d'ensemble d'une situation d'ennemi globale, et si l'avion de combat (1) est à l'intérieur de la zone de détection, le mode d'affichage est commuté vers un mode duel montrant des volumes restreints de la situation d'ennemi globale se rapportant à l'avion de combat ennemi (2).

2. Procédé selon la revendication 1, dans lequel l'étape de détermination (3) de la capacité de capteur de l'avion de combat ennemi (2) est réalisée en détectant ou en supposant la capacité de capteur de l'avion de combat ennemi (2).

3. Procédé selon la revendication 1 ou 2, dans lequel le mode d'affichage est sélectionné sur la base d'une condition prédéterminée comprenant le changement de position déterminé par rapport à une zone prédéfinie, dans lequel la zone prédéfinie est une zone géographique indicative d'une limite d'abattage de l'avion de combat ennemi (2).

4. Procédé selon l'une des revendications précédentes, dans lequel l'avion de combat ennemi (2) correspond à au moins l'un d'un véhicule aérien sans pilote et d'un hélicoptère.
